# EUROPÄISCHE PATENTANMELDUNG

(11) **EP 3 993 199 A1**
(43) Veröffentlichungstag der Anmeldung: **04.05.2022**
(21) Anmeldenummer: 21205673.3
(22) Anmeldetag: 29.10.2021
(51) Int. Cl.: H02G 3/12, B28B 23/00, E04G 21/18, H02G 3/08

(54) **INSTALLATIONSDOSE**

(30) Priorität: 02.11.2020 DE 102020128792
(71) Anmelder: Kaiser GmbH & Co. KG, 58579 Schalksmühle (DE)
(72) Erfinder: KAISER, Burkard, 58509 Lüdenscheid (DE)
(74) Vertreter: Rentsch Partner AG

(57) **Zusammenfassung**

Die vorliegende Erfindung bezieht sich auf eine Installationsdose (1) für elektrotechnische Zwecke umfassend eine röhrenförmige Seitenwand (2), die sich in eine axiale Richtung erstreckt und einen Installationsraum (3) umgibt. Die röhrenförmige Seitenwand (2) umrandet an einem ersten Ende (4) eine Installationsöffnung (5) und weist aus der axialen Richtung betrachtet eine grössere Erstreckung in eine erste Richtung als in eine zur ersten Richtung senkrechten zweiten Richtung auf. Eine zum Installationsraum (3) hingewandte Innenseite (8) der röhrenförmigen Seitenwand (2) weist zudem zwei sich bezüglich der ersten Richtung im Wesentlichen gegenüberliegende Abstützabschnitte (10) auf, welche seitlich in den Installationsraum (3) hineinragen und zum Abstützen von Spreizkrallen einer im Installationsraum (3) angeordneten Elektroinstallation senkrecht zu den Abstützabschnitten dienen.

## Beschreibung

Die vorliegende Erfindung bezieht sich auf eine Installationsdose für elektrotechnische Zwecke, insbesondere für die Anwendung im Betonbau.

Aus dem Stand der Technik sind verschiedene Installationsdosen bekannt. Hierbei haben diverse Installationsdosen einen ovalen oder rechteckigen Querschnitt, sodass der Installationsraum in eine Raumrichtung vergrössert wird und der Anschluss von elektronischen Bauteilen in dem Installationsraum erleichtert wird.

Gleichzeitig ist es von Vorteil, wenn das in der Installationsdose zu verbauende Bauteil nicht lose im Installationsraum angeordnet ist, sondern an der Installationsdose ausgerichtet befestigbar ist. Die aus dem Stand der Technik bekannten Befestigungsmöglichkeiten sind dabei oftmals aufwendig gestaltet.

Eine Aufgabe der Erfindung besteht darin eine Installationsdose bereitzustellen, in welcher eine Elektroinstallation einfach und schnell befestigt und montiert werden kann.

Eine Installationsdose gemäss der Erfindung dient für elektrotechnische Zwecke und dient bevorzugt zum Einbau in eine zu giessende Betonwand. Die Installationsdose umfasst hierbei in der Regel eine röhrenförmige Seitenwand, die sich in eine axiale Richtung erstreckt und einen Installationsraum umgibt. Die Seitenwand umrandet an einem ersten Ende in axialer Richtung eine Installationsöffnung. Je nach Ausgestaltung kann die röhrenförmige Seitenwand gegenüberliegend von der Installationsöffnung in einen Dosenboden übergehen. Alternativ kann die röhrenförmige Seitenwand an einem dem ersten Ende gegenüberliegenden zweiten Ende eine Montageöffnung umranden.

In einer bevorzugten Ausführung weist die röhrenförmige Seitenwand aus der axialen Richtung betrachtet in eine erste Richtung eine grössere Erstreckung auf als in eine zur ersten Richtung senkrechten zweiten Richtung. Die erste und die zweite Richtung stehen hierbei mit Vorteil jeweils senkrecht zu der axialen Richtung. In diesem Fall bilden die axiale Richtung, die erste Richtung und die zweite Richtung ein Achsenkreuz. Je nach Ausführungsform kann die Seitenwand einen ovalen, einen mehreckigen, bzw. einen rechteckigen Querschnitt in die axiale Richtung aufweisen. Die röhrenförmige Seitenwand kann weiter in die axiale Richtung einen variablen Querschnitt aufweisen, d.h. der Querschnitt kann sich über die axiale Richtung ändern. Beispielsweise kann der Querschnitt in die axiale Richtung mindestens eine Stufe aufweisen. Die grössere Erstreckung der röhrenförmigen Seitenwand in die erste Richtung ermöglicht hierbei eine vereinfachte und richtungsunabhängigere Einführung von einem oder mehreren Elektroinstallationsrohren in die Installationsdose sowie die nachträgliche vereinfachte Installation in dem vergrösserten Installationsraum. Dies ist insbesondere der Fall, wenn die Installationsdose in die zweite Richtung mit einer weiteren Installationsdose wirkverbunden werden soll, da dies den zur Verfügung stehenden Platz zur Einführung von Elektroinstallationsrohren entlang eines Dosenumfangs weiter verkleinert.

Wenn die Seitenwand in eine erste Richtung eine grössere Erstreckung als in die zweite Richtung aufweist, ist es für die Befestigung der Elektroinstallation vorteilhaft, wenn an einer Innenseite der röhrenförmigen Seitenwand, welche zum Installationsraum hingewandt ist, zwei sich bezüglich der ersten Richtung im Wesentlichen gegenüberliegende Abstützabschnitte angeordnet sind. Die Abstützabschnitte ragen hierbei in den Installationsraum, insbesondere seitlich in den Installationsraum, hinein und dienen zum Abstützen von Spreizkrallen einer im Installationsraum angeordneten Elektroinstallation senkrecht zu den Abstützabschnitten. Unter einer senkrechten Abstützung an den Abstützabschnitten kann verstanden werden, dass sich die Spreizkrallen in Bezug auf eine sich in die axiale Richtung erstreckende Mittelachse der röhrenförmigen Seitenwand radial nach aussen an den Abstützabschnitten abstützen. Die Abstützabschnitte haben den Vorteil, dass die im Installationsraum zu montierende Elektroinstallation einfach und verlässlich mittels der Spreizkrallen befestigbar ist. Zugleich stellt die längliche Ausgestaltung der röhrenförmigen Seitenwand in die erste Richtung einen vergrösserten Installationsraum neben den Abstützabschnitten bereit. Dieser vergrösserte Installationsraum kann insbesondere auch für eine Einführung eines Elektroinstallationsrohrs genutzt werden. Für den Einbau der Elektroinstallation ist es weiterhin vorteilhaft, wenn die Abstützabschnitte in die erste Richtung einen Abstand von 60 mm aufweisen. Die Abstützabschnitte können im Wesentlichen gerade ausgestaltet sein. Mit Vorteil sind die jeweiligen Abstützabschnitte jedoch konkav ausgestaltet. In einer bevorzugten Ausführungsform erstrecken sich die beiden Abstützabschnitte entlang einer im Wesentlichen zylindrischen Innenkontur in axialer Richtung. In diesem Fall kann die im Wesentlichen zylindrische Innenkontur einen Durchmesser von 60 mm aufweisen. Die zylindrische Innenkontur ist mit Vorteil vollständig in dem Installationsraum angeordnet, d.h. die zylindrische Innenkontur ist innerhalb der röhrenförmigen Seitenwand angeordnet. Die Abstützabschnitte können sich je nach Anwendung in axialer Richtung von der Installationsöffnung weg zumindest über einen Bereich der Seitenwand erstrecken. Mit Vorteil erstrecken sich die Abstützabschnitte jedoch über die gesamte Länge der röhrenförmigen Seitenwand in die axiale Richtung. Für ein verbessertes Abstützen der Spreizkrallen an den Abstützabschnitten können die jeweiligen Abstützabschnitte zumindest bereichsweise eine Oberflächenstruktur aufweisen. Beispielsweise kann die Oberfläche der jeweiligen Abstützabschnitte zumindest bereichsweise gerillt, gemustert oder mit ähnlichem ausgestaltet sein.

In einer möglichen Ausgestaltung kann die röhrenförmige Seitenwand an einer Aussenseite in axialer Richtung zwei gegenüberliegende Nuten mit jeweils einem Bodenabschnitt und zwei Seitenabschnitten ausbilden. Die jeweilige Nut kann sich lediglich über einen Bereich der röhrenförmigen Seitenwand oder über die gesamte Länge der röhrenförmigen Seitenwand erstrecken. D.h. die jeweilige Nut kann sich von dem ersten zu dem zweiten Ende der röhrenförmigen Seitenwand erstrecken. Der Bodenabschnitt und die Seitenabschnitte sind mit Vorteil dünnwandig ausgestaltet und bilden einen Teil der röhrenförmigen Seitenwand aus. Die jeweiligen Abstützabschnitte können hierbei jeweils auf dem Bodenabschnitt der Nuten und zum Installationsraum hingewandt angeordnet sein. Für eine verbesserte Stabilität können die Seitenabschnitte der Nut konvex in Richtung eines Nutinnenraums ausgeformt sein. Der Nutinnenraum ist hierbei als Raum zwischen den beiden Seitenabschnitten und dem Bodenabschnitt zu verstehen. Alternativ oder ergänzend können die Seitenabschnitte zumindest an einer Seite in Umfangsrichtung in einen benachbarten Abschnitt der röhrenförmigen Seitenwand übergehen.

In einer möglichen Ausgestaltung weist die röhrenförmige Seitenwand mindestens einen Wirkverbindungsbereich zum Wirkverbinden der Installationsdose mit einer weiteren Installationsdose auf. Dieser ist mit Vorteil in die zweite Richtung an der röhrenförmigen Seitenwand angeordnet. Für die Wirkverbindung mit einer weiteren Installationsdose kann die Installationsdose Wirkverbindungsmittel zum Fixieren der beiden Installationsdosen aneinander aufweisen. Die Wirkverbindungsmittel sind hierbei mit Vorteil aus der axialen Richtung wirkverbindbar, z.B. aus der axialen Richtung ineinander einschiebbar, so dass z.B. in die zweite Richtung zwischen den jeweiligen Wirkverbindungsmitteln der zu verbindenden Dosen ein Hinterschnitt gebildet wird. Die Wirkverbindungsmittel können im Wirkverbindungsbereich oder neben dem Wirkverbindungsbereich angeordnet sein. Alternativ können die Wirkverbindungsmittel jedoch auch an anderer Stelle angeordnet sein. Beispielsweise an dem später beschriebenen Deckel(n) und/oder den Befestigungsflügeln.

Der mindestens eine Wirkverbindungsbereich kann hierbei einen heraustrennbaren Durchbruchbereich umfassen, welcher dazu ausgelegt ist in einem herausgetrennten Zustand einen Durchbruch in die weitere wirkverbundene Installationsdose freizugeben. Der mindestens eine heraustrennbare Durchbruchbereich ist mit Vorteil entlang einer definierten Kontur heraustrennbar und schliesst bereichsweise an die Installationsöffnung an. Zum Heraustrennen kann entlang der Kontur mindestens ein Sollbruchelement angeordnet sein. Das mindestens eine Sollbruchelement kann beispielsweise durch eine Dünnstelle in der Seitenwand gebildet werden. Mit Vorteil ist der mindestens eine Wirkverbindungsbereich zumindest bereichsweise von einer Dichtung umgeben. Diese dichtet zumindest den Durchbruchbereich gegen eindringenden Beton ab.

Je nach Ausgestaltung kann die Installationsdose mindestens einen heraustrennbaren Einführbereich aufweisen, welcher dazu ausgelegt ist in einem herausgetrennten Zustand eine Einführöffnung für ein Elektroinstallationsrohr freizugeben. Eine mögliche Anordnung eines Einführbereichs ist in axialer Richtung an der Seitenwand gegenüberliegend dem Durchbruchbereich. Alternativ oder ergänzend kann mindestens ein heraustrennbarer Einführbereich in Umfangsrichtung zwischen einem der beiden Abstützabschnitte und dem mindestens einen Wirkverbindungsbereich angeordnet sein. Mit Vorteil ist mindestens ein Einführbereich derart an der Seitenwand angeordnet, dass sich eine Projektion dieses Einführbereichs in eine Einführrichtung mit mindestens einem Abstützabschnitt und/oder einem Seitenabschnitt der Nut überschneidet. Die Einführrichtung ist als diejenige Richtung zu verstehen, in welche sich ein Elektroinstallationsrohr im montierten Zustand durch die Einführöffnung erstreckt. Mit Vorzug ist die Einführrichtung hierbei senkrecht zur axialen Richtung angeordnet. Je nach Ausgestaltung kann auf dem Seitenabschnitt der Nut ebenfalls ein Rohranschlag für das einzuführende Elektroinstallationsrohr angeordnet sein.

Mit Vorteil weist die Installationsdose in die zweite Richtung zwei gegenüberliegende Wirkverbindungsbereiche auf. Diese sind somit um je 90° in Umfangsrichtung versetzt zu den Abstützabschnitten angeordnet. Die gegenüberliegenden Wirkverbindungsbereiche können ebenfalls einen Abstand von 60 mm zueinander aufweisen. In einer bevorzugten Ausführungsform weisen die beiden Wirkverbindungsbereiche jeweils mindestens einen heraustrennbaren Einführbereich auf. Des Weiteren sind mit Vorteil (umfangseitig) zwischen den Wirkverbindungsbereichen und den Abstützabschnitten jeweils ein weiterer heraustrennbarer Einführbereich, wie oben beschrieben, vorhanden.

Wie bereits oben beschrieben, kann die röhrenförmige Seitenwand eine der Installationsöffnung gegenüberliegende Montageöffnung aufweisen. Der eine oder die mehreren heraustrennbaren Einführbereiche sind mit Vorteil jeweils entlang einer definierten Kontur heraustrennbar und schliessen (jeweils) bereichsweise an die Montageöffnung an. Zum Heraustrennen kann entlang der Kontur mindestens ein Sollbruchelement angeordnet sein. Das mindestens eine Sollbruchelement kann beispielsweise durch eine Dünnstelle in der Seitenwand gebildet werden. Auch kann zumindest bereichsweise ein anderes Material in der Seitenwand verwendet werden um ein Sollbruchstelle zu erzeugen. Die Installationsdose kann aus Spritzgussmaterial bestehen. Mit Vorteil umfasst die Installationsdose jedoch eine erste (harte) Spritzgusskomponente und eine zweite, weichere Spritzgusskomponente. In einem herausgetrennten Zustand des mindestens einen heraustrennbaren Einführbereichs wird so eine entlang der Kontur verlaufende und an die Montageöffnung anschliessende Einführöffnung zum seitlichen Einführen eines Elektroinstallationsrohrs aus der axialen Richtung in den Installationsraum gebildet.

Die durch das Heraustrennen des Einführbereiches freigegebene Einführöffnung kann hierbei in eine erste Zone zur Aufnahme eines Elektroinstallationsrohrs und eine zweite Zone zum seitlichen Einschieben des Elektroinstallationsrohrs aus der axialen Richtung in die erste Zone aufgeteilt werden. Um das Elektroinstallationsrohr in der Einführöffnung bzw. in der ersten Zone zu fixieren ist es vorteilhaft, wenn die Kontur, respektive die Einführöffnung nach dem Heraustrennen des Einführbereiches in der axialen Richtung mindestens einen Hinterschnitt aufweist, sodass ein in die (erste Zone der) Einführöffnung aus der axialen Richtung quer eingeschobenes Rohr hinter dem Hinterschnitt verrastet. Für eine gute Positionierung des Rohres ist der mindestens eine Hinterschnitt mit Vorteil zwischen der ersten und der zweiten Zone angeordnet. In einer Variante kann die Einführöffnung, respektive der Einführbereich omega-förmig sein. In diesem Fall wird an beiden Seiten der Einführöffnung je ein Hinterschnitt gebildet zum Positionieren und Fixieren des Elektroinstallationsrohres.

In einer bevorzugten Variante des Einführbereichs, ist dieser gestaffelt ausgestaltet, sodass der Einführbereich für Kabel unterschiedlicher Durchmesser geeignet ist. Unter gestaffelt ist zu verstehen, dass in der Seitenwand mehrere, zumindest teilweise umeinander herum angeordnete Konturen angeordnet sind, welche jeweils an die Montageöffnung anschliessen und jeweils in einem herausgetrennten Zustand eine Einführöffnung für Rohre (je unterschiedlicher Durchmesser) freigeben. Beispielsweise kann der Einführbereich eine erste und eine zweite definierte Kontur aufweisen, welche jeweils bereichsweise an die Montageöffnung anschliessen. Mit Vorteil ist die zweite definierte Kontur um die erste definierte Kontur angeordnet. Die erste und die zweite definierte Kontur können je nach Ausgestaltung ebenfalls bereichsweise deckungsgleich sein. Mit Vorteil sind beide Konturen, respektive die entsprechenden Einführöffnungen, wie oben beschrieben Omega-förmig ausgestaltet.

Je nach Ausgestaltung kann die Installationsdose mindestens einen Deckel zum Verschliessen der Installationsöffnung und/oder der Montageöffnung aufweisen. Mit Vorteil sind beide Öffnungen jeweils durch einen Deckel verschlossen. Hierbei kann ein jeweiliger Deckel zum Verschliessen der Installationsöffnung oder zum Verschliessen der Montageöffnung verwendet werden und vice versa. Entsprechend können die Installationsöffnung und die Montageöffnung (bzw. der Rand der röhrenförmigen Seitenwand am ersten und am zweiten Ende) den gleichen Querschnitt in axialer Richtung aufweisen. Wenn sich die beiden Nuten von dem ersten zu dem zweiten Ende der Seitenwand erstrecken, ist es von Vorteil, wenn beide Deckel jeweils zwei entsprechend gegenüberliegende Deckelausschnitte in der ersten Richtung aufweisen, welche im montierten Zustand des Deckels an der röhrenförmigen Seitenwand zu den Nuten korrespondiert. Mindestens ein Deckel, vorzugsweise beide Deckel, kann weiter einen zylinderförmigen Deckelabschnitt aufweisen. Auf einer Frontseite des zylinderförmigen Deckelabschnitts kann eine umlaufende Dünnstelle angeordnet sein, welche einen heraustrennbaren Deckelbereich umgibt. In einem herausgetrennten Zustand des Deckelbereichs wird eine Öffnung zum Anschluss der in dem Installationsraum angeordneten Elektroinstallation freigegeben.

In einer möglichen Ausführungsform umfasst die Installationsdose mindestens einen Befestigungsflügel zur Befestigung an einer Armierung, welcher von der Seitenwand abragt. Hierbei kann der mindestens eine Befestigungsflügel (im Wesentlichen) senkrecht zur axialen Richtung, insbesondere in die erste Richtung, abragen. Mit Vorteil umfasst die Installationsdose zwei gegenüberliegende und von der Seitenwand abragende Befestigungsflügel. Der mindestens eine Befestigungsflügel kann je nach Ausgestaltung mindestens einen Steg zur Auflage auf der Armierung aufweisen. Ebenfalls kann der Befestigungsflügel jedoch mehrere Stege, welche im montierten Zustand der Installationsdose an der Armierung eine Auflageebene an der Armierung ausbilden, umfassen. In diesem montierten Zustand steht die Auflageebene mit Vorteil im Wesentlichen senkrecht auf der axialen Richtung. In einer bevorzugten Variante des Befestigungsflügels ist dieser aus der axialen Richtung betrachtet O-förmig ausgestaltet. D.h. der Befestigungsflügel umfasst mit Vorteil einen O-förmigen Steg. Hierbei kann dieser aus der axialen Richtung betrachtet eine äussere (O-förmige) und eine innere (O-förmige) Wandung umfassen. Zwischen der äusseren und der inneren Wandung, können Versteifungsrippen angeordnet sein. Des Weiteren können zwischen der äusseren und der inneren Wandung hohlzylinderförmige Hülsen angeordnet sein. Durch diese können z.B. Drähte zum Verrödeln des Befestigungsflügels an der Armierung angebracht werden.

Der mindestens eine Befestigungsflügel kann an seinem jeweiligen proximalen Enden integral an der röhrenförmigen Seitenwand angeformt sein oder über Kupplungsmittel mit dieser verbindbar ausgestaltet sein. Im Fall einer Nut an der röhrenförmigen Seitenwand, wie oben beschrieben, kann das proximale Ende des mindestens einen Befestigungsflügels die entsprechenden beiden Seitenabschnitte der Nut lokal miteinander verbinden. Das proximale Ende dieses Befestigungsflügels kann in diesem Fall die Nut an mindestens einer Stelle überspannen. Je nach Ausgestaltung kann zwischen dem proximalen Ende des Befestigungsflügels und dem Bodenabschnitt der Nut eine Durchgangsöffnung ausgeformt werden. Diese Durchgangsöffnung ist vorteilhaft während des Vorgangs des Einbetonierens der Installationsdose, da diese ein Durchfliessen des Betons ermöglicht und somit die auf die Installationsdose wirkenden Kräfte durch den Beton verringert. Bei einem wirkverbindbaren Befestigungsflügel kann dieser an dem Boden- und/oder an den Seitenabschnitten der Nut befestigbar (z.B. verrastbar) sein. In einer möglichen Variante kann an dem Bodenabschnitt und/oder an den Seitenabschnitten der Nut mindestens ein Führungsmittel vorgesehen sein, entlang welchem der jeweilige Befestigungsflügel in die axiale Richtung verstellbar angeordnet werden kann. Alternativ oder ergänzend können in der Nut und/oder am mindesten einen Befestigungsflügel Arretiermittel angeordnet sein, welche den Befestigungsflügel in einer gewünschten Position in der Nut fixiert.

Der mindestens eine Befestigungsflügel kann in axialer Richtung aussermittig an der Seitenwand angeordnet sein. Mit Vorteil kann der mindestens eine Befestigungsflügel hierbei näher an der Installationsöffnung als an dem gegenüberliegenden Ende der Seitenwand in axialer Richtung angeordnet sein. Der Befestigungsflügel kann hierbei zumindest bereichsweise keilförmig, insbesondere in die erste Richtung keilförmig, ausgestaltet sein. Unter keilförmig ist zu verstehen, dass die Erstreckung in die axiale Richtung (axiale Erstreckung) des Befestigungsflügels oder einer Kontur des Befestigungsflügels mit zunehmendem Abstand von der Seitenwand zunimmt. Unter in die erste Richtung keilförmig ist zu verstehen, dass aus der zweiten Richtung betrachtet die Erstreckung in die axiale Richtung (axiale Erstreckung) des Befestigungsflügels (oder einer Kontur des Befestigungsflügels) mit zunehmendem Abstand von der Seitenwand zunimmt. Insbesondere kann der keilförmige Befestigungsflügel um eine Mittelebene des Befestigungsflügels (normal zur axialen Richtung) symmetrisch aufgebaut sein. Die Mittelebene steht mit Vorteil senkrecht zur axialen Richtung. Die keilförmige Ausgestaltung bewirkt unter anderem, dass der Befestigungsflügel um sein proximales Ende flexibler ist. Alternativ oder ergänzend kann der Befestigungsflügel an seinem proximalen Ende mindestens eine Deformationszone umfassen. Bei einer Belastung des Befestigungsflügels in die axiale Richtung, insbesondere dem Aufbringen einer Last an einem dem proximalen Ende gegenüberliegenden distalen Ende des Befestigungsflügels, deformiert sich der Befestigungsflügel im Wesentlichen in der mindestens einen Deformationszone. Die Deformation ist hierbei in der Regel eine elastische, reversible Deformation. Dies kann durch eine entsprechende Wahl der Materialstärke und/oder Materialwahl (z.B. eine weitere Kunststoffkomponente, insbesondere weichelastische Kunststoffkomponente) und/oder einer Verrippung und/oder Profilierung in der Deformationszone erzielt werden. Beispielsweise kann der mindestens eine Steg, insbesondere der O-förmige Steg, lediglich mit seiner äusseren Wandung an der röhrenförmigen Seitenwand angeformt sein. Alternativ oder ergänzend kann der Steg des Befestigungsflügels, welcher die beiden Seitenabschnitte einer entsprechenden Nut miteinander verbindet dünnwandig sein. D.h. der die beiden Seitenabschnitte miteinander verbindende Steg kann lediglich eine Wandung (d.h. keine äussere und innere Wandung) aufweisen. Diese Ausgestaltung begünstigt die Deformation des Befestigungsflügels um sein proximales Ende. Eine Deformation um den Bereich des proximalen Endes des Befestigungsflügels erlaubt im Allgemeinen eine elastischere Abstützung der Installationsdose an einer Schalungswand. Dies verbessert auf der einen Seite die Eignung der Installationsdose für die Verwendung für unterschiedliche Betondeckungen (Stärke des Betons von Armierung zur Wandoberfläche). Auf der anderen Seite erlaubt die erhöhte Flexibilität es die röhrenförmige Seitenwand in die axiale Richtung länger auszugestalten und so den Installationsraum zu vergrössern. Dadurch wird ebenfalls die Montage weiter vereinfacht.

Ergänzend kann der mindestens eine Befestigungsflügel einen Klemmsteg umfassen. Der Klemmsteg dient zur Festklemmung einer Armierung zwischen dem Klemmsteg und mindestens einem Steg des Befestigungsflügels, sodass die Installationsdose an der Armierung befestigt ist. Der Klemmsteg ist mit Vorteil aus der axialen Richtung betrachtet innerhalb einer Kontur des Befestigungsflügels angeordnet. Der Klemmsteg kann hierbei an einem ersten Ende an einem Steg des Befestigungsflügels angeformt oder andersartig befestigt sein. Ein dem ersten Ende gegenüberliegendes zweites Ende kann frei angeordnet sein, sodass der Klemmsteg um sein erstes Ende flexibel ausgelenkt werden kann. Mit Vorteil erstreckt sich der Klemmsteg im Wesentlichen in die erste Richtung. Der Klemmesteg des mindestens einen Befestigungsflügels kann hierbei ebenfalls in die erste Richtung keilförmig ausgestaltet sein. Unter keilförmig ist hier zu verstehen, dass aus der zweiten Richtung betrachtet die axiale Erstreckung des Befestigungsflügels mit zunehmenden Abstand von der Seitenwand (in die erste Richtung) zu- oder abnimmt. Bei zwei an der Seitenwand montierten Befestigungsflügeln nimmt hierbei mit Vorteil die axiale Erstreckung des Klemmsteges eines ersten Befestigungsflügels mit zunehmenden Abstand von der Seitenwand zu und die axiale Erstreckung des Klemmsteges eines zweiten Befestigungsflügels mit zunehmenden Abstand von der Seitenwand ab.

Der zuvor beschriebene mindestens eine Befestigungsflügel kann an unterschiedlich gestalteten Seitenwänden angebracht sein. Die röhrenförmige Seitenwand kann beispielsweise ebenfalls rund oder viereckig aus der axialen Richtung betrachtet ausgestaltet sein. Weiterhin kann die röhrenförmige Seitenwand, wie oben beschrieben, in einen der Installationsöffnung gegenüberliegenden Dosenboden übergehen.

Die Anmelderin behält sich das Recht vor auf das erfinderische Konzept der Ausgestaltung eines Befestigungsflügels, wie es in der vorliegenden Anmeldung beschrieben ist, als separate Teilanmeldung zu verfolgen. Auch eine Installationsdose mit mindestens einem an der Seitenwand angeordneten Befestigungsflügel sollte daher als ein separates erfinderisches Konzept betrachtet werden, das Gegenstand einer oder mehrerer Teilpatentanmeldungen sein kann.

Anhand der in den nachfolgenden Figuren gezeigten Ausführungsbeispiele und der dazugehörigen Beschreibung werden Aspekte der Erfindung näher erläutert. Es zeigen:
- Fig. 1: Eine Variante einer Installationsdose in einer perspektivischen Ansicht.
- Fig. 2: Die Installationsdose gemäss Figur 1 ohne Deckel in der Draufsicht.
- Fig. 3: Die Installationsdose mit zwei angeformten Deckeln in einer perspektivischen Ansicht.

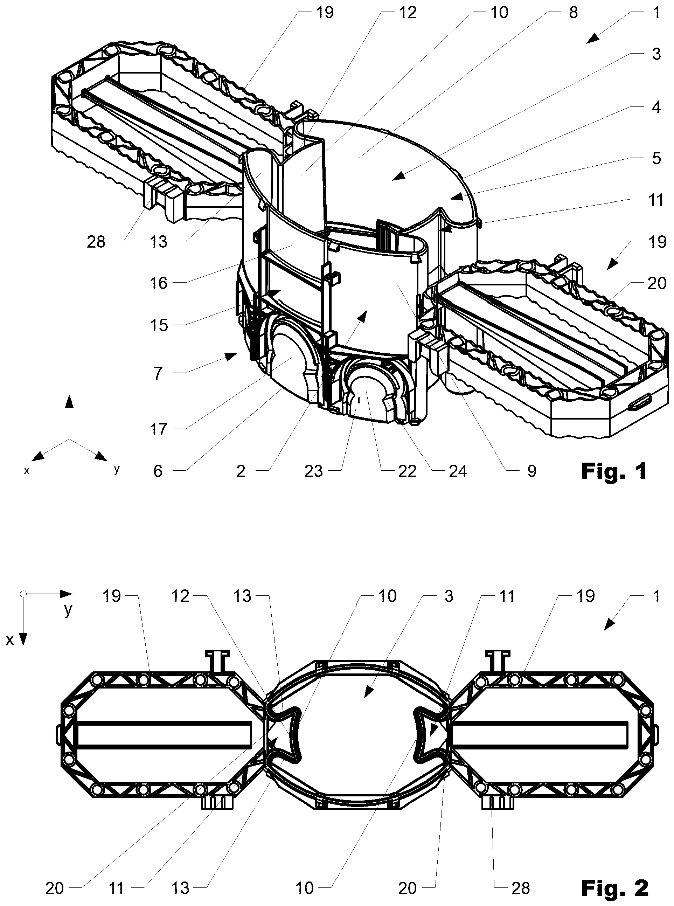

**Figur 1** und **Figur 2** zeigen eine Installationsdose 1 mit einer röhrenförmigen Seitenwand 2, die sich in eine axiale Richtung (z-Richtung) erstreckt und einen Installationsraum 3 umgibt. Im gezeigten Fall erstreckt sich die röhrenförmige Seitenwand 2 von einem ersten Ende 4 zu einem zweiten Ende 6. An dem ersten Ende 4 umrandet die Seitenwand 2 hierbei eine Installationsöffnung 5 und an einem zweiten Ende 6 eine der Installationsöffnung 5 gegenüberliegende Montageöffnung 7. Die Installationsöffnung 5 und die Montageöffnung 7 können jeweils durch einen Deckel 18 (hier nicht gezeigt) verschlossen werden.

Die röhrenförmige Seitenwand 2 kann betrachtet aus der axialen Richtung eine grössere Erstreckung in eine erste Richtung (y-Richtung) als in eine zur ersten Richtung senkrechten zweiten Richtung (x-Richtung) aufweisen. Eine zum Installationsraum 3 hingewandte Innenseite 8 der röhrenförmigen Seitenwand 2 weist zudem zwei sich bezüglich der ersten Richtung im Wesentlichen gegenüberliegende Abstützabschnitte 10 auf. Diese ragen seitlich in den Installationsraum 3 hinein und dienen zum Abstützen von Spreizkrallen einer im Installationsraum 3 angeordneten Elektroinstallation senkrecht zu den Abstützabschnitten 10. Die Abstützabschnitte 10 sind hierbei jeweils konkav ausgebildet und erstrecken sich entlang einer im Wesentlichen zylindrischen Kontur (nicht gezeigt) in axialer Richtung (vgl. Draufsicht in Figur 2). Im gezeigten Fall erstrecken sich in die axiale Richtung entlang der Aussenseite 9 der röhrenförmigen Seitenwand 2 zwei Nuten 11. Die beiden Nuten 11 weisen jeweils einen Bodenabschnitt 12 und zwei gegenüberliegende Seitenabschnitte 13 auf. Die jeweiligen Abstützabschnitte 10 sind hierbei an dem jeweiligen Bodenabschnitt 12 und zum Installationsraum 3 hingewandt angeordnet. Die jeweiligen Abstützabschnitte 10 können ferner eine Oberflächenstruktur 14 zum verbesserten Verankern der Spreizkrallen aufweisen.

In zweiter Richtung weist die Installationsdose 1 zwei gegenüberliegende Wirkverbindungsbereiche 15 auf, welche zum Wirkverbinden mit einer weiteren Installationsdose (nicht gezeigt) dienen. Die Wirkverbindungsbereiche 15 umfassen einen heraustrennbaren Durchbruchbereich 16, welcher an die Installationsöffnung 5 angrenzt. Dem Durchbruchbereich in axialer Richtung gegenüberliegend kann ein heraustrennbarer Einführbereich 17 angeordnet sein, welcher an die Montageöffnung 7 angrenzt. Beide Bereiche sind zumindest bereichsweise von einer Dünnstelle 21 umgeben, entlang welcher diese heraustrennbar sind. Zwischen den Abstützabschnitten 10 und den Wirkverbindungsbereichen 15 befinden sich in Umfangsrichtung der röhrenförmigen Seitenwand jeweils weitere heraustrennbare Einführbereiche 17. Für die Wirkverbindung mit einer weiteren Installationsdose weist die Installationsdose 1 Wirkverbindungsmittel 28 auf. Die Wirkverbindungsmittel 28 sind in der gezeigten Ausführungsform an den Befestigungsflügeln angeordnet, jedoch sind ebenfalls andere Anordnungen denkbar. Der Befestigungsflügel ist hierbei in die erste Richtung keilförmig ausgestaltet und weist an seinem proximalen Ende eine Deformationszone auf.

Die Installationsdose 1 kann wie gezeigt, insgesamt sechs Einführbereiche 17 und zwei Durchbruchbereiche 16 umfassen. Eine durch die Heraustrennung des Einführbereiches 17 freigegebene Einführöffnung kann hierbei in eine erste Zone 22 zur Aufnahme eines Rohres und in eine zweite Zone 23 zum seitlichen Einschieben des Elektroinstallationsrohrs aus der axialen Richtung in die erste Zone 22 aufgeteilt werden. Um das Elektroinstallationsrohr in der Einführöffnung bzw. in der ersten Zone 22 zu fixieren ist es vorteilhaft, wenn die Kontur, respektive die Einführöffnung nach dem Heraustrennen des Einführbereiches in der axialen Richtung mindestens einen Hinterschnitt 24 aufweist, sodass ein in die (erste Zone der) Einführöffnung quer eingeschobenes Rohr hinter dem Hinterschnitt 24 verrastet. Beispielsweise kann, wie gezeigt, an beiden Seiten der Einführöffnung ein Hinterschnitt 24 angeordnet sein, so dass eine Omega-förmige Einführöffnung entsteht.

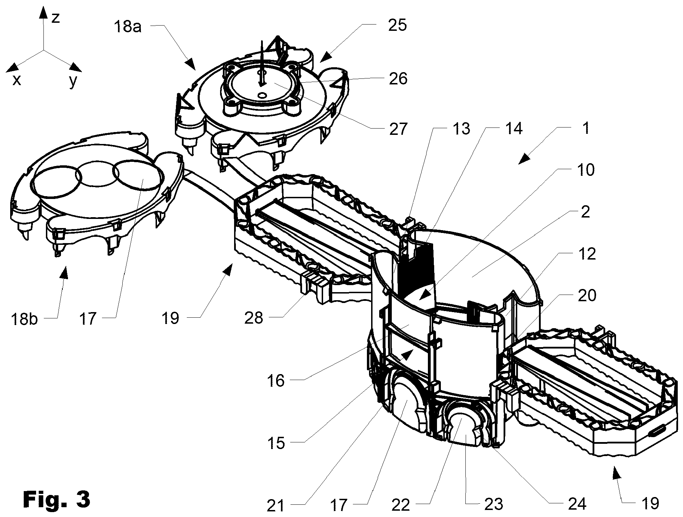

**Figur 3** zeigt eine Installationsdose mit einem ersten und einem zweiten Deckel 18a, 18b. Die röhrenförmige Seitenwand unterscheidet sich hierbei nicht wesentlich von der Seitenwand, wie zu **Figur 1** und **Figur 2** beschrieben. Die Befestigungsflügel 19 sind ebenfalls im Wesentlichen gleich ausgestaltet. Die jeweiligen Deckel 18 dienen zum Verschliessen der Installationsöffnung 5 und/oder der Montageöffnung 7. In einem initialen Zustand vor der Montage in einer Wand können die Deckel, wie gezeigt, an der Seitenwand und/oder mindestens einem Befestigungsflügel z.B. über ein Band, insbesondere ein durchtrennbares Band, angeformt sein. Da die Installationsöffnung 5 und die Montageöffnung 7 gleiche Querschnitte in axiale Richtung aufweisen, können beide Decke entweder auf der der Installationsöffnung 5 oder der Montageöffnung 7 angebracht werden. Ebenfalls kann die Montageöffnung 7 und die Installationsöffnung 5 von einem baugleichen Deckel 18 verschlossen werden. Der erste als auch der zweite Deckel 18a, 18b umfassen im gezeigten Fall zwei gegenüberliegende Deckelausschnitte 25 in der ersten Richtung, welche im montierten Zustand des jeweiligen Deckels 18a, 18b an der Seitenwand 2 zu der entsprechenden Nut 11 korrespondiert. Der erste Deckel 18a weist einen zylinderförmigen Deckelabschnitt 26 auf, an dessen Frontseite eine umlaufende Dünnstelle angeordnet sein, welche einen heraustrennbaren Deckelbereich 27 umgibt. In einem herausgetrennten Zustand des Deckelbereichs 27 wird eine Öffnung zum Anschluss der in dem Installationsraum 3 angeordneten Elektroinstallation freigegeben. Der zweite Deckel 18b kann wie gezeigt mindestens einen weiteren Einführbereich für ein Elektroinstallationsrohr aufweisen. Der mindestens eine Einführbereich bildet in einem herausgetrennten Zustand eine runde Einführöffnung aus, welche vollständig von dem Deckel umrandet ist. Andere Deckelausgestaltungen, insbesondere unterschiedliche Deckelausgestaltungen zum Verschliessen der Installationsöffnung 5 und der Montageöffnung 7, sind jedoch ebenfalls denkbar.

**LISTE DER BEZUGSZEICHEN**

| | | | |
|---|---|---|---|
| 1 | Installationsdose | 15 | Wirkverbindungsbereich |
| 2 | Seitenwand | 16 | Durchbruchbereich |
| 3 | Installationsraum | 17 | Einführbereich |
| 4 | Erstes Ende | 18 | Deckel |
| 5 | Installationsöffnung 20 | 19 | Befestigungsflügel |
| 6 | Zweites Ende | 20 | Steg |
| 7 | Montageöffnung | 21 | Dünnstelle |
| 8 | Innenseite | 22 | Erste Zone |
| 9 | Aussenseite | 23 | Zweite Zone |
| 10 | Abstützabschnitte 25 | 24 | Hinterschnitt |
| 11 | Nut | 25 | Deckelausschnitt |
| 12 | Bodenabschnitt | 26 | Deckelabschnitt |
| 13 | Seitenabschnitt | 27 | Deckelbereich |
| 14 | Oberflächenstruktur | 28 | Wirkverbindungsmittel |

## Patentansprüche

1. Installationsdose (1) für elektrotechnische Zwecke umfassend
a. eine röhrenförmige Seitenwand (2), die sich in eine axiale Richtung erstreckt und einen Installationsraum (3) umgibt;
b. eine von einem ersten Ende (4) der Seitenwand umrandete Installationsöffnung (5); wobei
c. die röhrenförmigen Seitenwand (2) betrachtet aus der axialen Richtung eine grössere Erstreckung in eine erste Richtung als in eine zur ersten Richtung senkrechten zweiten Richtung aufweist; und wobei
d. eine zum Installationsraum (3) hingewandte Innenseite (8) der röhrenförmigen Seitenwand (2) zwei sich bezüglich der ersten Richtung im Wesentlichen gegenüberliegende Abstützabschnitte (10) aufweist, welche in den Installationsraum (3) hineinragen und zum Abstützen von Spreizkrallen einer im Installationsraum (3) angeordneten Elektroinstallation senkrecht zu den Abstützabschnitten dienen.

2. Installationsdose gemäss Patentanspruch 1, **dadurch gekennzeichnet, dass** die beiden Abstützabschnitte (10) sich entlang einer im Wesentlichen zylindrischen Kontur in axialer Richtung erstrecken.

3. Installationsdose gemäss Patentanspruch 2, **dadurch gekennzeichnet, dass** die Abstützabschnitte (10) zueinander einen Abstand von 60 mm aufweisen.

4. Installationsdose gemäss einem der vorangehenden Patentansprüche, **dadurch gekennzeichnet, dass** sich die Abstützabschnitte (10) in axialer Richtung von der Installationsöffnung (5) weg zumindest über einen Bereich der röhrenförmigen Seitenwand (2) erstrecken.

5. Installationsdose gemäss einem der vorangehenden Patentansprüche, **dadurch gekennzeichnet, dass** die röhrenförmige Seitenwand (2) an einer Aussenseite (9) in axialer Richtung zwei gegenüberliegende Nuten (11) mit jeweils einem Bodenabschnitt (12) und zwei Seitenabschnitten (13) ausbildet.

6. Installationsdose gemäss Patentanspruch 5, **dadurch gekennzeichnet, dass** die Abstützabschnitte (10) an dem jeweiligen Bodenabschnitt (12) der Nuten (11) und zum Installationsraum (3) hingewandt angeordnet sind.

7. Installationsdose gemäss Anspruch 5 oder 6, **dadurch gekennzeichnet, dass** mindestens ein heraustrennbarer Einführbereich (17) derart an der röhrenförmigen Seitenwand (2) angeordnet ist, dass sich eine Projektion dieses Einführbereichs (17) in eine Einführrichtung eines Elektroinstallationsrohrs mit mindestens einem Abstützabschnitt (10) und/oder einem Seitenabschnitt (13) einer Nut (11) überschneidet.

8. Installationsdose gemäss einem der vorangehenden Patentansprüche, **dadurch gekennzeichnet, dass** die jeweiligen Abstützabschnitte (10) eine Oberflächenstruktur (14) aufweisen.

9. Installationsdose gemäss einem der vorangehenden Patentansprüche, **dadurch gekennzeichnet, dass** die röhrenförmige Seitenwand (2) mindestens einen Wirkverbindungsbereich (15)zum Wirkverbinden der Installationsdose (1) mit einer weiteren Installationsdose in die zweite Richtung aufweist, wobei in Umfangsrichtung mindestens zwischen einem der beiden Abstützabschnitte (10) und dem mindestens einen Wirkverbindungsbereich (15) mindestens ein heraustrennbarer Einführbereich (17) angeordnet ist, welcher dazu ausgelegt ist in einem herausgetrennten Zustand eine Einführöffnung für ein Elektroinstallationsrohr freizugeben.

10. Installationsdose gemäss einem der vorangehenden Patentansprüche, **dadurch gekennzeichnet, dass** die röhrenförmige Seitenwand (2) eine der Installationsöffnung (5) gegenüberliegende Montageöffnung (7) berandet.

11. Installationsdose gemäss Patentanspruch 10, **dadurch gekennzeichnet, dass** die Installationsdose (1) mindestens einen Deckel (18) zum Verschliessen der Installationsöffnung und /oder der Montageöffnung aufweist.

12. Installationsdose gemäss einem der vorangehenden Patentansprüche, **dadurch gekennzeichnet, dass** die Installationsdose (1) in die erste Richtung zwei bezüglich der Seitenwand (2) gegenüberliegende und von dieser abragende Befestigungsflügel (19) zur Befestigung an einer Armierung aufweist.

13. Installationsdose gemäss Patenanspruch 5 und 12, **dadurch gekennzeichnet, dass die** Befestigungsflügel (19) jeweils einen Steg (20) umfassen und sich dieser Steg (20) über die entsprechende Nut (11) der röhrenförmigen Seitenwand (2) erstreckt.

14. Installationsdose gemäss Patenanspruch 12 oder 13, **dadurch gekennzeichnet, dass** die Befestigungsflügel (19) jeweils zumindest bereichsweise keilförmig, insbesondere in die erste Richtung keilförmig, ausgestaltet sind.

15. Installationsdose gemäss einem der vorangehenden Patentansprüche, **dadurch gekennzeichnet, dass** die Seitenwand (2) in axialer Richtung zumindest bereichsweise einen ovalen oder mehreckigen Querschnitt aufweist.
